# EUROPEAN PATENT APPLICATION

(11) **EP 1 764 688 A2**
(43) Date of publication of application: **21.03.2007**
(21) Application number: 06119291.0
(22) Date of filing: 22.08.2006
(51) Int. Cl.: G06F 9/445

(54) **Distributed embedded software for a switch**

(30) Priority: 30.08.2005 US 215877
(71) Applicant: McData Corporation, Broomfield, CO 80021 (US)
(72) Inventor: Beal, David, Longmont, CO 80504 (US); Rodgers, James, Boulder, CO 80305 (US); Burrell, Brian, Niwot, CO 80503 (US); Goodin, Douglas, Boulder, CO 80303 (US); Cox, William, Boulder, CO 80301 (US); Crater, Michael, Arvada, CO 80005 (US)
(74) Representative: Moore, Barry

(57) **Abstract**

A flexible architecture for embedded firmware of a multiple protocol switch can be implemented on a variety of hardware platforms. Hardware components of a SAN switch are embodied as cooperative modules (e.g., switch modules, port modules, service modules, etc.) with one or more processors in each module. Likewise, firmware components of a SAN switch can be assigned at initialization and/or run time across a variety of processors in any of these modules. The processors and firmware components can communicate via a messaging mechanism that is substantially independent of the underlying communication medium or the module in which a given processor resides. In this manner, firmware components can be reassigned (e.g., in a failover condition), added or removed without substantial disruption to the operation of the SAN.

## Description

### Technical Field

The invention relates generally to storage area networks, and more particularly to distributed embedded software for a switch.

### Background

A storage area network (SAN) may be implemented as a high-speed, special purpose network that interconnects different kinds of data storage devices with associated data servers on behalf of a large network of users. Typically, a storage area network is part of the overall network of computing resources for an enterprise. The storage area network is usually clustered in close geographical proximity to other computing resources, such as mainframe computers, but may also extend to remote locations for backup and archival storage using wide area network carrier technologies.

SAN switch products are typically controlled by a monolithic piece of embedded software (i.e., firmware) that is executed by a single processor (or a redundant pair of processors) and architected very specifically for a given product. For example, the firmware may be written for a product's specific processor, number of ports, and component selection. As such, the firmware is not written to accommodate the scalability of processing power or communications capability (e.g., the addition of processors, switching capacity, ports, etc.). Likewise, software development of monolithic firmware for different products is inefficient because the firmware cannot be easily ported to different hardware architectures.

### Summary

Implementations described and claimed herein address the foregoing problems by providing a flexible architecture for firmware of a multiple protocol switch that can be implemented on a variety of hardware platforms. Hardware components of a SAN switch are embodied as cooperative modules (e.g., switch modules, port modules, intelligent service modules, etc.) with one or more processors in each module. Likewise, firmware components (representing the executable code of individual subsystems) of a SAN switch can be individually assigned, loaded, and executed at initialization and/or run time across a variety of processors in any of these modules. The processors and firmware components can communicate via a messaging mechanism that is substantially independent of the underlying communication medium or the module in which a given processor resides. In this manner, firmware components can be reassigned (e.g., in a failover condition), added or removed without substantial disruption to the operation of the SAN.

In some implementations, articles of manufacture are provided as computer program products, such as an EEPROM, a flash memory, a magnetic or optical disk, etc. storing program instructions. One implementation of a computer program product provides a computer program storage medium readable by a computer system and encoding a computer program. Other implementations are also described and recited herein.

### Brief Descriptions of the Drawings

FIG. 1 illustrates an exemplary computing and storage framework including a local area network (LAN) and a storage area network (SAN).

FIG. 2 illustrates an exemplary multi-switch SAN fabric.

FIG. 3 schematically illustrates an exemplary port module.

FIG. 4 illustrates exemplary operations for distributing firmware to multiple processors within a switch.

### Detailed Descriptions

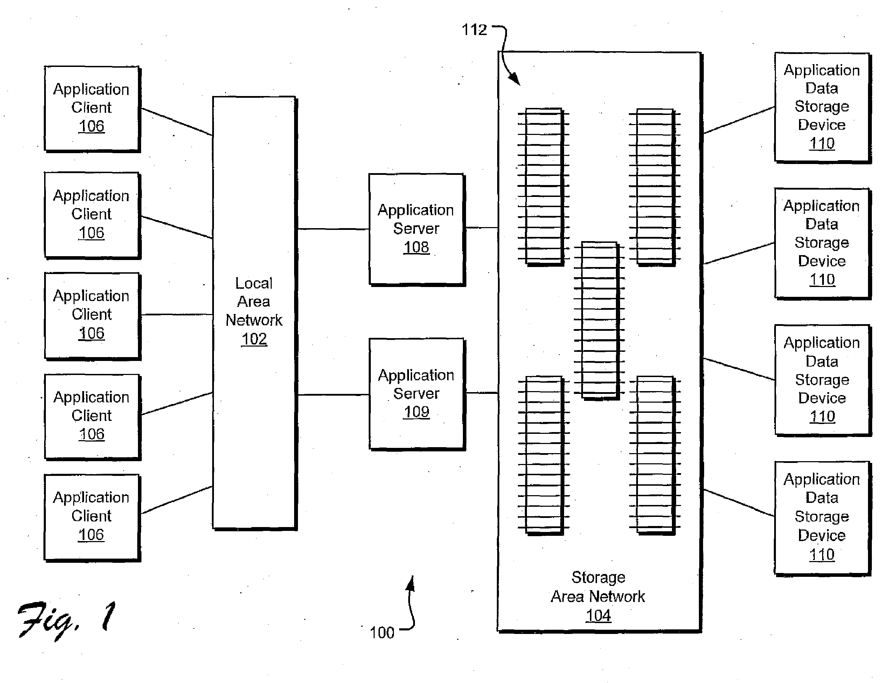

FIG. 1 illustrates an exemplary computing and storage framework 100 including a local area network (LAN) 102 and a storage area network (SAN) 104. Various application clients 106 are networked to application servers 108 and 109 via the LAN 102. Users can access applications resident on the application servers 108 and 109 through the application clients 106. The applications may depend on data (e.g., an email database) stored at one or more of the application data storage devices 110. Accordingly, the SAN 104 provides connectivity between the application servers 108 and 109 and the application data storage devices 110 to allow the applications to access the data they need to operate. It should be understood that a wide area network (WAN) may also be included on either side of the application servers 108 and 109 (i.e., either combined with the LAN 102 or combined with the SAN 104).

Switches 112 within the SAN 104 include one or more modules that support a distributed firmware configuration. Accordingly, different firmware components, which embody the code for individual subsystems, can be individually loaded and executed on various processors in different modules, allowing distribution of components for a given service or for multiple services across multiple processors and modules. This distributed firmware architecture can, therefore, facilitate load balancing, enhance scalability, and improve fault tolerance within a switch.

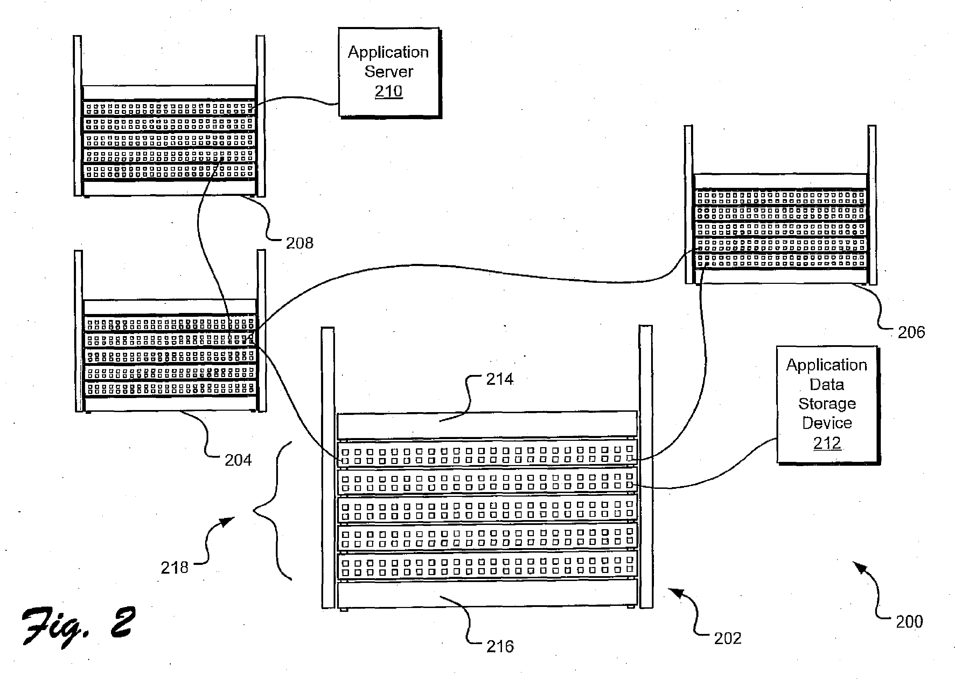

FIG. 2 illustrates an exemplary multi-switch SAN fabric 200. A director-level switch 202 is connected to other director-level switches 204, 206, and 208 via Fibre Channel links (note: the illustrated links can represent multiple redundant links, including potentially one or more active links and one or more backup links). The switch 208 is also connected to an application server 210, which can access an application data storage device 212 through the SAN fabric 200.

The switch 202 can take multiple forms, including the racked module configuration illustrated in FIG. 2. A module typically includes an enclosed package that can provide its own cooling and its own power, as opposed to a blade, which is strictly dependent upon cooling and power source from a chassis. One type of module includes a port module, which provides user ports and basic internal switching. In one implementation, a single port module may operate as a stand-alone switch. In an alternative stacked implementation, multiple port modules may be interconnected via extender ports to provide a switch with a larger number of user ports. Interconnection by extender ports avoids consumption of the module's user ports and therefore enhances the scalability of the switch.

Another type of module includes a switch module, which provides non-blocking interconnection of port modules and other types of modules via extender ports. The switch 202 illustrated in FIG: 2, therefore, takes the form of a racked combination of switch modules (e.g., switch modules 214 and 216) and port modules 218, in which the switch modules provide an interconnection fabric for the port modules without consuming the user ports of the port modules.

Yet another type of module includes an intelligent service module, which can provide intelligent services to the fabric through a director-level switch. One type of intelligent service module is called a director services module (DSM): An exemplary DSM is termed a router services module (RSM), which provides SAN internetworking capabilities. Another exemplary DSM is termed a virtualization services module (VSM), which provides virtualization services for block storage devices. Another exemplary DSM is termed a file services module (FSM), which provides virtualization of file-based storage devices. Yet another exemplary DSM is termed an aggregation services module (ASM), which allows increased port counts by providing oversubscribed user ports. Other DSMs are contemplated. DSMs can connect to the port modules through user ports or through extender ports.

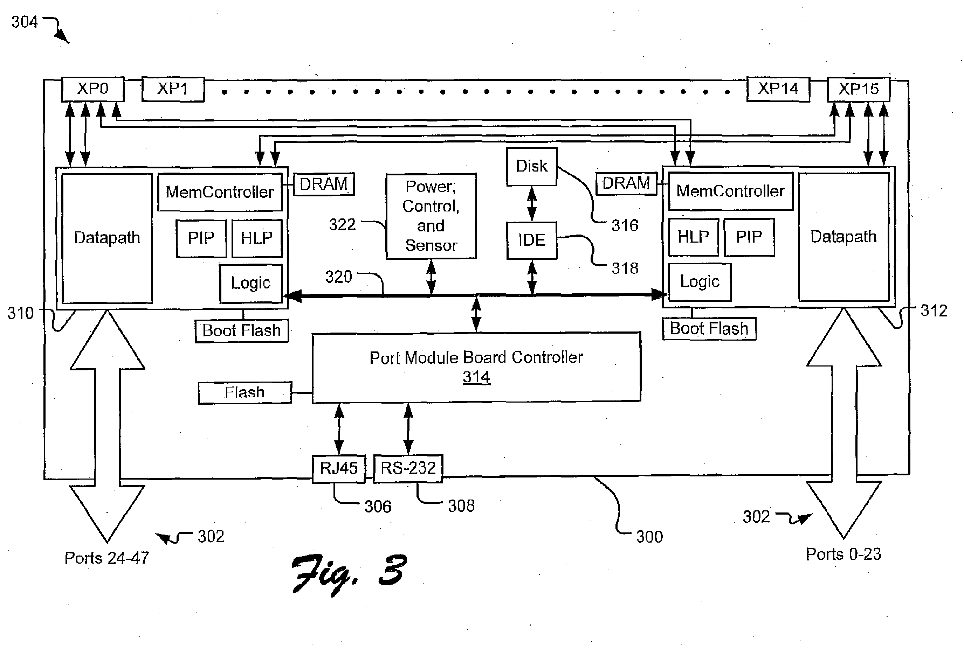

FIG. 3 schematically illustrates an exemplary port module 300, which includes 48 user ports 302 (also referred to as front ports) and 16 extender ports 304 (also referred to as X ports - XP00 through XP 15). It should be understood that other configurations are also contemplated (e.g., 32 front port configurations). The port module 300 also supports a management Ethernet interface 306 (RJ45) and a serial interface 308 (RS-232). Internally, the port module 300 includes two port module application specific integrated circuits 310 and 312 (ASICs), wherein each ASIC includes two individual embedded processor cores, a port intelligence processor (PIP) and high level processor (HLP). The processors share access to common DRAM through the illustrated memory controller in each ASIC. The module also includes a power supply and cooling features (e.g., one or more fans), although alternative configurations may receive power from a common (i.e., shared with one or more other modules) power supply and/or receive cooling from a common cooling feature. In an alternative implementation, the processors are located in a separate gate array device, rather than being integrated into the ASIC.

Each ASIC provides, among other functions, a switched datapath between a subset of the user ports 302 and the 16 extender ports 304. For a stand-alone port module, its extender ports are cabled together. For a stacked configuration, the extender ports of the various port modules are cabled together. For a racked configuration, the extender ports of the various port modules and switch modules are cabled together. In one implementation, the extender ports are cabled using four parallel bi-directional fiber or copper links, although other configurations are contemplated.

A Port Module Board Controller 314 (PMBC) manages several ancillary functions, such as power-on resets event handling, power failure interrupt handling, fan speed control, Ethernet port control and serial interface control. The PMBC 314 has a common module interface for those functions that are shared among the various processors of the ASIC. The interfaces arbitrate as to which processors can access one of the common functions at any given time.

The port module 300 also contains a non-volatile or persistent memory, depicted in FIG. 3 as a magnetic disk 316, although other types of persistent memory, such as flash memory or a compact flash memory, are also contemplated. FIG. 3 depicts an IDE controller 318 to interface with the persistent memory. The persistent memory is shared by all of the processors in the port module 300 through an intra-module bus 320 and stores program instructions, configuration data and diagnostic data (e.g., logs and traces) for the processors.

A power, control and sensor subsystem 322 contains voltage converters and a power control circuit. The power control circuit is responsible for monitoring voltages to ensure they are within specified limits, margining voltages during qualification and manufacturing processes, setting output bits based on monitoring results, and monitoring the system temperature. The power, control, and sensor subsystem 322 can be accessed by the processors through the PMBC 314.

Each processor also has an embedded port through which it can access the switching fabric. The switching fabric views the embedded ports no differently than the front ports, such that frames received at any front port on any port module may be routed in hardware to the embedded port of any port module processor on any port module. Frames sent from the embedded port of any port module may be transmitted out any user port or may be received at an embedded port of any other port module processor. Processors of the same port module as well as processors of different port modules can communicate through the switching fabric with any other processor in the switch.

In contrast, an exemplary switch module architecture includes no front ports and consists of one or more switch module ASICs, each of which switches cells between its extender ports, Each switch port ASIC contains an embedded processor core (called a switch intelligence processor or SIP) and a management Ethernet interface. Exemplary switch module architectures can also include multiple processors for redundancy, although single processor modules are also contemplated.

It should be understood that the hardware architectures illustrated in FIG. 3 and described herein are merely exemplary and that port modules and other modules may take other forms.

Individual modules can include one or more subsystems, which are embodied by firmware components executed by individual processors in the switch. In one implementation, each persistent memory in a module stores a full set of possible firmware components for all supported subsystems. Alternatively, firmware components can be distributed differently to different modules. In either configuration, each processor is assigned zero or more subsystems, such that a processor loads the individual firmware component for each assigned subsystem from persistent memory. The assigned processor can then execute the loaded components. If a subsystem in persistent memory is not assigned to a processor, then the corresponding firmware component need not be loaded for or executed by the processor.

In one implementation, a subsystem is cohesive, in that it is designed for a specific function, and includes one or more independently-scheduled tasks. A subsystem need make no assumptions about its relative location (e.g., by which processor or which module its firmware is executed), although it can assume that another subsystem with which it interacts might be located on a different processor or module. A subsystem may also span multiple processors. For example, a Fibre Channel Name Server subsystem may execute on multiple processors in a switch.

Subsystems are independently loadable and executable at initialization or run time and can communicate with each other by sending and receiving messages, which contributes to their location-independence. Furthermore, within a given processor's execution state, multiple subsystems can access a common set of global functions via a function call.

In one implementation of a port module, for example, the firmware is divided into several types of containers: core services, administrative services, and switching partitions. Core services include global functions available via a function call to all subsystems executing on a given processor. Exemplary core services may include without limitation the processor's operating system (or kernel), an inter-subsystem communication service (ISSC), an embedded port driver, a shared memory driver (for communication with the other processor on the ASIC), and protocol drivers for communications sent/received at the processor's embedded port (e.g., Fibre Channel FC-2, TCP/IP stack, Ethernet).

Administrative services generally pertain to the operation and management of the entire switch. The administrative services container may include without limitation a partition manager, a chassis manager, a security manager, a fault isolation function, a status manager, a subsystem distribution manager (SDM), management interfaces, and data replication services.

An instance of the SDM, for example, runs on each HLP in a port module. A Primary instance of the SDM determines which HLPs run which subsystems, initiates those subsystems, and restarts those subsystems when required. When the SDM starts an instance of a subsystem, the SDM informs the instance of its role (e.g., Master/Backup/Active/Primary) and in the case of distributed subsystems, which ASIC the instance is to serve. An SDM subsystem can use a variety of algorithms to determine a distribution scheme - which processors in a switch run which subsystems and in which role(s). For example, some subsystems may be specified to be loaded for and executed by a particular processor or set of processors. Alternatively, in a round-robin distribution, the SDM distributes a first subsystem to a first processor, a second subsystem to a second processor, etc. until all processors are assigned one subsystem. At this point, the SDM distributes another subsystem to the first processor, and then another subsystem to the second processor, etc. This round-robin distribution can continue until the unassigned subsystems are depleted.

In a weighted distribution, each subsystem is designated a weight and the SDM distributes the subsystems to evenly distribute aggregate weights across all processors, although it should be understood that a non-even distribution of aggregate weights may be applied (e.g., by user-specified configuration commands). An SDM can also distribute subsystems in which an affinity is assigned between two or more subsystems. Affinity implies that the two or more subsystems perform best when executing on the same processor. In addition, the SDM can distribute subsystems according to certain rules. For example, Active and Backup subsystems should generally reside on different processors, and where possible, on different modules. Other rules are also contemplated. It should also be understood that a combination of any or all of the described algorithms as well as other algorithms may be used to develop the distribution scheme.

A distribution scheme generally identifies each instance of a specified subsystem and the discovered processor to which it is assigned. In one implementation, an instance of a subsystem may be identified by a subsystem name (which can distinguish among different versions of the same subsystem) and a role, although other identification formats are also contemplated. Further, each processor may be identified by a module ID and a processor number, although other identification formats are also contemplated (e.g., module serial number and processor number). At least a portion of the distribution scheme is dynamically generated based on the discovery results and the distribution algorithm(s).

The SDM can also distribute multiple instances of the same subsystem to multiple processors. For example, instances of a Fibre Channel Name Server subsystem, which incur heavy processing loads, may be executed on multiple processors to achieve fast response. In contrast, for subsystems that maintain complex databases (e.g., FSPF), SDM may limit a subsystem to a single processor to minimize implementation complexities. It should be understood that these and other algorithms can be employed in combination or in some other variation to achieve defined objectives (e.g., load balancing, fault tolerance, minimum response time, etc.).

Switching partitions refer to firmware directly related to the switching and routing functions of the switch, including one or more Fibre Channel virtual switches, Ethernet switching services, and IP routing protocols. A switching partition may also include zero or more inter-partition routers, which perform SAN routing and IP routing between Fibre Channel switches.

As discussed previously, subsystems primarily communicate via an inter-subsystem communication (ISSC) facility supported by the core services that are common to various modules. Such subsystems can make function calls to make use of a core service. In contrast, to communicate with each other, such subsystems use a message passing service provided by the ISSC facility in the core services.

Each instance, of a subsystem has a public "mailbox" at which it receives unsolicited external stimuli in the form of messages. This mailbox is known by name to other subsystems at compile time. This mailbox and the messages known by it are the interface the subsystem offers to other firmware within the switch. A subsystem may have additional mailboxes, which can be used to receive responses to messages sent by the subsystem itself or to receive intra-subsystem messages sent between tasks within the subsystem.

The subsystems are not aware of whether their peers are executing on the same processor, different processors on the same port module, or different processors on different modules. As such, relocation of a given subsystem (e.g., when a subsystem fails over to a Backup processor) does not affect communications with other subsystems because the message passing facility maintains location independence.

In one implementation, each module in a switch has two identifiers: a serial number and a module ID. A serial number is burned into a module when it is manufactured, is globally unique among all modules and cannot be changed by a user. Serial numbers are used by firmware and management interfaces to identify specific modules within a stack or rack before they are configured. A module ID is a small non-negative number distinct within a given stack or rack. After a switch stack or rack has been assembled and configured, module IDs are used by the management interfaces to identify modules. A module's module ID may be changed by a user, but firmware checks prevent a module ID from being duplicated within the stack or rack.

Individual components may also be identified according to the type of module specified by the module ID and serial number. In addition, individual processors may be uniquely identified by the module ID of the module in which it resides and by a processor ID within that module (e.g., P₀ or P₁).

In one implementation, the ISSC facility provides methods for both synchronous (blocking) and asynchronous (non-blocking) interface behavior. Exemplary functions and return codes of an ISSC facility are listed below:

**Table 1 - Exemplary ISSC Methods**

| Method | Description |
|---|---|
| GetMessage() | Returns the first message in the queue that matches the criteria indicated by the function arguments or a null pointer if there is no appropriate message in the message queue. |
| WaitMessage() | Grants the system a preemption point, even if an appropriate message is available in the queue. |
| ReceiveMessage() | Returns the first message in the queue that matches the criteria indicated by the function arguments, if a qualifying message is available in the queue, or grants the system a preemption point: |
| SendMessage() | Originates and sends a message based on parameters supplied by the caller, including the destination address, or otherwise implied by the message. |
| RespondMessage() | Replies to a received message based on parameters supplied by the caller or implied by the message, such as the destination address. |

Messages are addressed using functional addresses or dynamic addresses. A functional address indicates the role of the destination subsystem, but not its location. Subsystems register their functional addresses with the ISSC facility when they start and when their roles change. In contrast, a dynamic address is assigned at run time by the ISSC facility. A dynamic address of an owner subsystem may be learned by its clients that need to communicate with their owner. A dynamic address could be used, for example, within a subsystem to send messages to a task whose identity is not known outside the subsystem. The ISSC facility routes messages from one subsystem to another based on routes programmed into the ISSC facility by the SDM. The SDM assigns roles to subsystems when they are created and programs routes within the ISSC facility to instruct the ISSC facility on where to send messages destined for specific functional addresses (e.g., an Active or Backup instance of a Fibre Channel Name Server for Virtual Switch 'X'). In an alternative implementation, each subsystem registers its role with the ISSC facility when it initializes.

The SDM identifies all individual processor of individual modules to assign an individual subsystem to a processor by sending command to a processor to execute a subsystem having a specified name. The processor loads the appropriate firmware components from persistent memory, if necessary, and executes the component to start the subsystem.

The SDM also assigns roles to the subsystems it assigns. Each subsystem conforms to one of two models: distributed or centralized. Each instance of a distributed subsystem acts in at least one of three roles: Active, Primary, or Backup:

**Table 2 - Exemplary Roles**

| Role | Description |
|---|---|
| Active | An Active instance of a subsystem serves each ASIC in the switch. Generally, each Active instance runs on the HLP of the ASIC that is serving (its "native" processor). During failure of its native processor, however, an Active instance may run temporarily on another processor. |
| Backup | A Backup instance exists for each Active/Primary instance of a distributed subsystem. A distributed subsystem maintains a database to handle firmware and processor failures. When a role change occurs, a Backup instance is available to take over responsibility from a failed Active or Primary without requiring a new process or thread to be started. |
| Primary | A Primary instance is designated for some subsystems. A Primary instance of a distributed subsystem is an Active instance that has additional responsibilities. For example, at initialization, a Primary instance of a Name Server subsystem is started on one processor to communicate with other Active Name Server subsystems on other processors. |

Each instance of a centralized subsystem acts in one of two roles: master or backup. A master instance provides a particular set of services for all modules in a rack or stack. Each master instance has a backup instance that executes on a different processor, in the same module or in a different module. As in the distributed subsystem model, the backup constantly maintains an up-to-date database to handle firmware or hardware failures and is available to take over for a failed master without requiring a new process or execution thread to be started.

A local ISSC subsystem monitors the heartbeat messages among the subsystems executing on the local processor. Thus ISSC detects when a subsystem becomes non-responsive, in which case ISSC informs the SDM. As such, the SDM can use the heartbeat manager function of the ISSC to determine the health of subsystems on its HLP and the health of other processors in the switch. In addition, the ISSC instances within a switch periodically exchange heartbeat messages among themselves for the purposes of determining processor health. When failure of Master, Active, or Primary instance of a subsystem is detected, failover to the corresponding Backup instance is handled by the heartbeat manager and the ISSC, which cooperate to inform the Backup instance of its role change to a Master/Active/Primary instance and to redirect inter-subsystem messages to it. Thereafter, the SDM is informed of the failure. In response, instances of the SDM cooperate to elect a temporary Primary SDM instance, which decides which HLP should execute the new Backup instance of the failed subsystem, directs the SDM instance on that HLP to start a new Backup instance and verifies that the new Backup instance has started successfully. The temporary Primary SDM then resigns from the Primary role and a new and possibly different Primary instance is elected upon each failure event.

When the ISSC facility detects that the communications link to a particular subsystem has failed (e.g., by detection of a loss of heartbeat messages or the inability to send to the destination subsystem), the ISSC facility can failover the path to the Backup instance of the subsystem, if a Backup instance has been assigned (e.g., by the SDM). Prior to re-routing messages addressed to a Master subsystem with a designated Backup instance, the ISSC facility sends a new-master notification to the local SDM and also instructs the Backup instance that it is about to become the Master instance. Previously undelivered messages queued from the former Master instance are redirected to the new Master instance.

In response to the new-master notification, the SDM starts a new Backup subsystem or otherwise notifies the Backup subsystem that it is now a Backup instance and programs the new Backup route into the local ISSC facility. The local ISSC facility forwards or multicasts the new Backup route to other instances of ISSC within the switch. After all ISSC facilities with the switch accept the new Backup route, the new Backup subsystem is made effective.

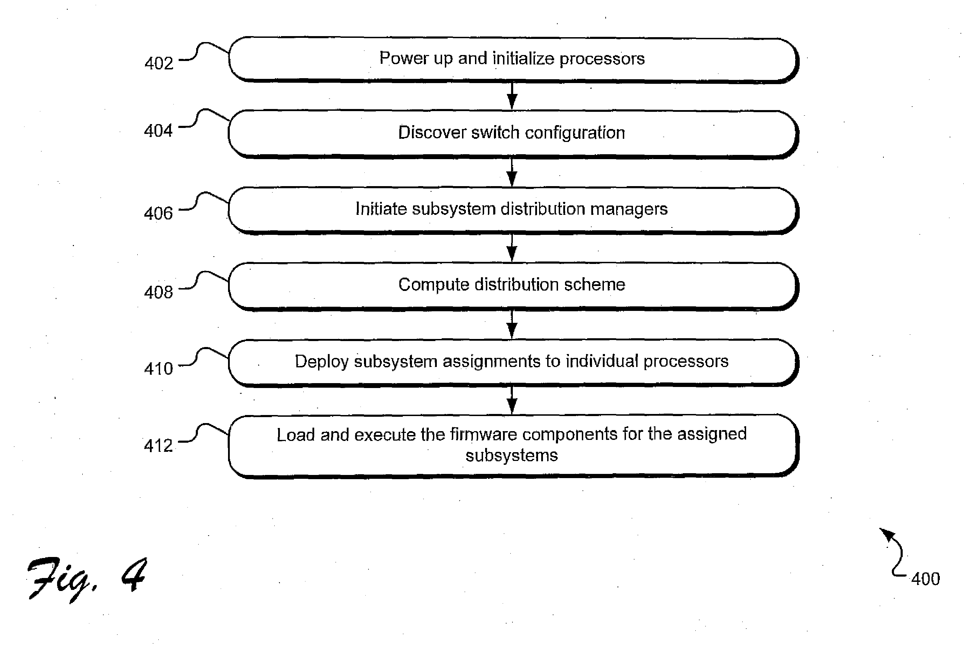

FIG. 4 illustrates exemplary operations 400 for distributing firmware to multiple processors within a switch. An initialization operation 402 handles the power up of a module and performs local level initialization of a module processor (e.g., a Port Intelligence Processor). Although this description is provided relative to a port module having two processors in each ASIC, each module in the switch undergoes a similar initialization process. In the case of the port module, one processor is termed a "Port Intelligence Processor" or PIP. The second processor is termed a "High Level Processor" or HLP. The initialization operation 402 also performs basic diagnostics on the DRAM to ensure a stable execution environment for the processors. The PIP then loads a PIP boot loader monitor (BLM) image from a persistent memory into DRAM and transfers control to the BLM.

The BLM initializes the remaining hardware components of the module and executes Power-Up diagnostics, potentially including ASIC register tests, loopback tests, etc. The initialization operation 402 then loads an HLP boot image from the persistent memory to DRAM and releases the HLP from reset. Thereafter, the initialization operation 402 loads the PIP kernel and PIP core services modules from persistent memory into DRAM and releases execution control to the kernel.

Concurrently, responsive to release from reset, the HLP also performs a low-level initialization of the HLP core, executes basic diagnostics, loads the BLM from persistent memory into DRAM, and transfers control to the BLM. The BLM initializes any remaining HLP-specific hardware components of the module and executes Power-Up diagnostics. The initialization operation 402 then loads the HLP kernel and HLP core services modules from persistent memory into DRAM and releases execution control to the kernel.

During initialization, intermodule communication relies on the extender port (XP) link single cell commands, small packets routed point-to-point without dependence on the ASIC's forwarding tables. This initialization operation 402 is performed for each port module ASIC, switch module ASIC, and DSM ASIC in each module in the switch, although exceptions are contemplated. Upon completion of initialization of the switch, intermodule communication and potentially all interprocessor communications can be handled over the full set of XP links (e.g., using packets or frames that are decomposed in hardware into cells for parallel forwarding).

A discovery operation 404 includes a staged process in which low-level processors in a switch exchange information in order to determine the number and types of modules and components in the switch. In one implementation, a discovery facility (e.g., including one or more instances of a Topology Discovery (TD) subsystem) within the core services provides this functionality, although other configurations are contemplated. The discovery facility is responsible for determining module topology and connectivity (e.g., type of module, number of processors in the module, which processor is executing certain other subsystems, etc.).

As discussed, after system power-up (or after a module's firmware code is restarted), the kernel in the module is initiated and initialized. Thereafter, the discovery facility is instantiated, initialized, and executed to perform a staged topology discovery process. After completion of this process, the discovery facility will remain idle until a change to the system topology occurs.

The modules of a switch are interconnected via high-speed parallel optic transceivers (or their short haul copper equivalent) coupled to extender ports and four lane bi-directional cables called XP links. Two modules are normally connected by at least two cables containing eight or more bi-directional fibre pairs. User traffic enters and leaves the system as frames or packets via user ports but it communicates over the XP links in parallel as small cells, each with a payload of (approximately) 64 bytes, 128 bytes, or some other predefined size. XP links can carry module-to-module control information in combination with user Fibre Channel and Ethernet data between port modules and switch modules. As such, the discovery operation 404 sends a query to the device cabled to each of a module's extender ports and receives identification information from the device, including for example a module ID, a module serial number, and a module type.

In one implementation, a topology table is constructed to define the discovered topology. An exemplary topology table is shown below, although other data structures may be employed.

**Table 3 - Exemplary Topology Table**

| Field | Description |
|---|---|
| Type | Identifies the type of module (e.g., switch module, port module, VSM, ASM, etc.) |
| Module ID | Uniquely identifies the module within the switch |
| Serial # | Uniquely identifies the module globally |
| PIP State | Identifies whether each PIP is the module manager, and whether it is initialized. |
| HLP State | Identifies the number of HLPs capable of hosting higher-level subsystems, identifies the attributes of each HLP, and identifies the processor ID |

Another data structure, called an XP connection table, indicates what type of module is connected to each extender port. Each instance of a discovery facility subsystem maintains its own XP connection table, which includes a port number and the module type that is connected to that port, if any.

Yet another data structure, called a system table, identifies modules and processors that comprise the switch system (e.g., the chassis, the rack, the stack, etc.) and describes how they are interconnected. In one implementation, the table is owned by the chassis manager subsystem and is filled in with topology information retrieved from the discovery facility. The system table maps each topology and connection table pair to a corresponding TD instance, which is then mapped to a corresponding module.

The transmission of user frames or packets depends on the proper configuration, by embedded software, of forwarding tables that may be implemented as content addressable memories (CAMs) and "cell spraying masks", which indicate how the parallel lanes of the XP links are connected. Before the CAMs and masks can be properly programmed, subsystems executing in different modules discover one another and determine how the XP links are attached. In one implementation, discovery is accomplished using single cell command (SCC) messages, which are messages segmented into units of no more than a single cell and transmitted serially over a single lane of a single extender port, point-to-point.

Modules discover one another by the exchange of SCC messages sent from each lane of each extender port. Following a successful handshake, each module adds to its map of XP links that connect it with other modules. In the case of port modules, where there are two processor pairs, each processor pair can communicate via the intra-module bus to which they are both connected. Nevertheless, in one implementation, intra-module discovery is accomplished via the extender ports. However, in an alternative implementation, processors within the same module could use internal communication links for intra-module discovery.

In one exemplary stage of discovery, termed "intra-ASIC" discovery, a single processor (e.g., a single PIP) in each processor pair in the module queries its counterpart processor (e.g., HLP) associated with the same ASIC to discover the other's presence, capabilities, and health. The processors communicate via a shared-memory messaging interface. Based on the information received (or not received, as the case may be) from the HLP, the discovery facility instance executing on the first processor updates the module fields in the topology table associated with the discovery facility instance.

Thereafter, in a second exemplary stage of discovery termed "intra-module" discovery, the first processor queries the other like processor in the module (e.g., the other PIP in the module) via the infra-module bus. The processors determine which will take the role of module manager within the module. The discovery facility instance executing on the designated module manager processor then updates the topology table with the designation.

Another exemplary stage is termed "inter-module" discovery, in which processors on different modules exchange information. After the XPort links become active, each processor sends and receives SCC messages via each connected extender port to obtain the module ID, module type and module serial number of the module on the other end of the cable. This information is used to complete the XP connection table for each discovery facility instance.

After XPort connectivity is determined, each discovery facility instance broadcasts its information (e.g., serial number, chassis manager ownership state, initialization state) to all known discovery facility instances, which will respond with their own information. In this manner, all discovery facility instances have the knowledge of all of the other discovery facility instances within the system. Through negotiation, one discovery facility instance is selected as a chassis manager, which retrieves the topology and XP connection tables from each of the other discovery instances and generates the system table. Thereafter, all of the discovery facility instances have access to this table.

An initialization operation 406 starts the Primary SDM instance on a processor of one module and starts Active SDM instances on other processors within the switch. Based on the discovered switch configuration (e.g., the processors and connectivity identify in such discovery), a computation operation 408 applies one or more distribution algorithms to develop a distribution scheme of the switch in its current configuration. In some circumstances, an administrator may specify certain subsystems to be individually loaded and executed by specific processors. In other circumstances, affinity, weighting, and/or other allocation techniques can be used to determine the distribution scheme. Various combinations of these techniques may be employed to generate a distribution scheme.

It should also be understood that, because individual subsystems are selectively loaded and executed in each processor per the assignments in the distribution scheme, an entire firmware image containing all subsystems supported by the switch need not be loaded into processor executable memory. Not only does this save system resources, but this also allows a single processor to execute different versions of a given type of subsystem. The SDM instance merely assigns the name of one version of the subsystem (and its role) and the name of another subsystem (and its role) to the same processor, which then loads the individual code images for the specific subsystems and executes them. In this manner, the processor can execute one version of a subsystem for a specified set of ports and another version of the subsystem for a different set of ports, thereby allowing the administrator to test a new version without imposing it on the entire fabric supported by the module.

A deployment operation 410 then assigns subsystems to individual processors by communicating an identifier and role of a subsystem to each processor, where each processor is identified using a unique module ID and processor ID within the switch. On the basis of this assignment, the processors load the individual firmware components for their assigned subsystems and execute the components in subsystem operation 412.

The embodiments of the invention described herein are implemented as logical steps in one or more computer systems. The logical operations of the present invention are implemented (1) as a sequence of processor-implemented steps executing in one or more computer systems and (2) as interconnected machine or circuit modules within one or more computer systems. The implementation is a matter of choice, dependent on the performance requirements of the computer system implementing the invention. Accordingly, the logical operations making up the embodiments of the invention described herein are referred to variously as operations, steps, objects, or modules. Furthermore, it should be understood that logical operations may be performed in any order, unless explicitly claimed otherwise or a specific order is inherently necessitated by the claim language.

The above specification, examples and data provide a complete description of the structure and use of exemplary embodiments of the invention. Since many embodiments of the invention can be made without departing from the spirit and scope of the invention, the invention resides in the claims hereinafter appended. Furthermore, structural features of the different embodiments may be combined in yet another embodiment without departing from the recited claims.

## Claims

1. A method of distributing firmware services across multiple processors in a network switch, the method comprising:
discovering the multiple processors within the network switch;
computing a distribution scheme for the firmware services among the identified multiple processors;
selectively assigning individual firmware components associated with each firmware service to the identified multiple processors in accordance with the distribution scheme; and
selectively loading the firmware components assigned to each processor.

2. The method of claim 1 further comprising executing the loaded firmware components on the assigned processor.

3. The method of claim 1 or claim 2 wherein the discovering operation comprises:
querying a device through an extender port; and
receiving a module identifier from the device.

4. The method of any preceding claim wherein the computing operation comprises:
identifying a set of the firmware services to execute in the switch; and either
allocating the identified firmware services evenly across the multiple processors to yield the distribution scheme, or
determining a weight associated with each identified firmware service; and allocating the identified firmware services across the multiple processors such that an aggregate weight of firmware services is assigned to each processor to yield the distribution scheme, or
determining which identified firmware services have an affinity for each other; and allocating the identified firmware services having an affinity for each other to the same processor in the distribution scheme.

5. The method of any preceding claim further comprising at least one of:
assigning an active role to an instance of a firmware service assigned to one of the processors,
assigning a backup role to an instance of a firmware service assigned to one of the processors,
assigning a primary role to an instance of a firmware service assigned to one of the processors.

6. The method of any preceding claim further comprising:
monitoring a health status of an active instance of a firmware service on a first processor;
detecting a failure of the firmware service based on the monitored health status;
failing over to a backup instance of the firmware service on a second processor.

7. The method of any preceding claim further comprising:
monitoring a health status of a first processor executing an active instance of a firmware service;
detecting a failure of the first processor based on the monitored health status;
failing over to a backup instance of the firmware service on a second processor.

8. The method of any preceding claim wherein the selectively assigning operation comprises:
assigning at least two different versions of the same firmware component to a single processor.

9. The method of any preceding claim wherein the selectively loading operation comprises:
loading at least two different versions of the same firmware component for execution by a single processor.

10. The method of any preceding claim further comprising:
executing at least two different versions of the same firmware component by a single processor.

11. A computer-readable medium having computer-executable instructions for performing a computer process implementing the method of any preceding claim .

12. A networking switch supporting distribution of firmware services across multiple processors, the networking switch comprising:
a discovery module that identifies the multiple processors within the network switch;
a computation module that computes a distribution scheme for the firmware services among the identified multiple processors;
a deployment module that selectively assigns firmware components associated with each firmware service to the identified multiple processors in accordance with the distribution scheme; and
a subsystem nodule that selectively loads the firmware components assigned to each processor.

13. The networking switch of claim 12 wherein the subsystem module further executes the loaded firmware components on the assigned processor.

14. The networking switch of claim 12 or claim 13 wherein the discovery module queries a device through an extender port of the network switch and receives a module identifier from the device.

15. The networking switch of any one of claims 12 to 14 wherein the computation module:
identifies a set of the firmware services to execute in the switch and allocates the identified firmware services evenly across the multiple processors to yield the distribution scheme, or
identifies a set of the firmware services in the switch, determines a weight associated with each identified firmware service, and allocates the identified firmware services across the multiple processors such that an aggregate weight of firmware services is assigned to each processor to yield the distribution scheme, or
identifies a set of the firmware services to execute in the switch, determines which identified firmware services have an affinity for each other, and allocates the identified firmware services having an affinity for each other to the same processor in the distribution scheme.

16. The networking switch of any one of claims 12 to 15 further comprising:
a heartbeat monitor that monitors a health status of an active instance of a firmware service on a first processor and detects a failure of the firmware service based on the monitored health status; and
a communications module that fails over to a backup instance of the firmware service on a second processor.

17. The networking switch of any one of claims 12 to 16 further comprising:
a heartbeat monitor that monitors a health status of a first processor executing an active instance of a firmware service and detects a failure of the first processor based on the monitored health status;
a communications module that fails over to a backup instance of the firmware service on a second processor.

18. The networking switch of any one of claims 12 to 17 wherein the subsystem module loads at least two different versions of the same firmware component for execution by a single processor or executes at least two different versions of the same firmware component by a single processor.
